Europäisches Patentamt

European Patent Office

Office européen des brevets

(19)

(11) Numéro de publication: **0 021 967**
**B1**

(12) **FASCICULE DE BREVET EUROPEEN**

(45) Date de publication du fascicule du brevet: **13.04.83**

(51) Int. Cl.³: **G 02 F 1/00, G 02 F 1/01**

(21) Numéro de dépôt: **80400864.7**

(22) Date de dépôt: **13.06.80**

(54) Dispositif électrooptique à biréfringence électrique comportant un polymère polarisé.

(30) Priorité: **13.06.79 FR 7915142**

(43) Date de publication de la demande:
**07.01.81 Bulletin 81/1**

(45) Mention de la délivrance du brevet:
**13.04.83 Bulletin 83/15**

(84) Etats contractants désignés:
**DE GB NL**

(73) Titulaire: **THOMSON-CSF**
**173, Boulevard Haussmann**
**F-75379 Paris Cedex 08 (FR)**

(72) Inventeur: **Broussoux, Dominique**
**"THOMSON-CSF" SCPI 173, Bld Haussmann**
**F-75360 Paris Cedex 08 (FR)**
Inventeur: **Micheron, François**
**"THOMSON-CSF" SCPI 173, Bld Haussmann**
**F-75360 Paris Cedex 08 (FR)**

(74) Mandataire: **Giraud, Pierre et al,**
**THOMSON-CSF SCPI 173, Bld Haussmann**
**F-75379 Paris Cedex 08 (FR)**

(56) Documents cités:
**US - A - 3 711 180**
**US - A - 3 839 067**
**US - A - 4 004 849**

**PHYSICAL REVIEW A, vol. 14, no. 6, décembre 1976 NEW YORK (US) T. BISCHOFBERGER et al.: "Measurement of the high-frequency electro-optical Kerr effect in a plastic crystal: Succinonitrile", pages 2278—2284.**

Le dossier contient des informations techniques présentées postérieurement au dépôt de la demande et ne figurant pas dans le présent fascicule.

(56) Documents cités:
**IBM TECHNICAL DISCLOSURE BULLETIN, vol. 18, no. 11, avril 1976 NEW YORK (US) A. AVIRAM et al.: "Displays from polyelectrolytic gells", pages 3861—3862. INTERNATIONALE ELEKTRONISCHE RUNDSCHAU, vol. 27, no. 12, décembre 1973 R. Th. KERSTEN: "Grundlagen und Anwendungsmöglichkeiten der integrierten Optik", pages 261—266.**

Courier Press, Leamington Spa, England.

IBM TECHNICAL DISCLOSURE BULLETIN, vol.
22, no. 8B, janvier 1980 NEW YORK (US)
J.D. SWALEN: "High Frequency light
modulator or display", pages 3801—3802.
IBM TECHNICAL DISCLOSURE BULLETIN, vol.
9, no. 11, avril 1967, NEW YORK (US)
W. L. PETICOLAS et al.: "Electro-optic
materials", page 1588.

# 0 021 967

## Dispositif électrooptique à biréfringence électrique comportant un polymère polarisé

La présente invention se rapporte aux dispositifs électro-optiques à biréfringence destinés à assurer la transmission d'un rayonnement optique polarisé en créant une modification des caractéristiques de polarisation sous la commande d'un champ électrique modulateur.

Certains de ces dispositifs fonctionnent selon le principe de l'effet Kerr qui prévoit une différence de marche proportionnelle au carré de l'intensité du champ électrique modulateur. Dans ce cas, on peut citer des cellules à biréfringence électrique mettant en oeuvre des liquides tels que le nitrobenzène. L'utilisation de milieux à biréfringence électrique se présentant à l'état liquide ougazeux est relativement complexe. D'autres dispositifs fonctionnent selon la principe de l'effet Pockels qui prévoit une différence de marche fonction pratiquement linéaire de l'intensité de champ électrique modulateur. Dans ce cas, le milieu à biréfringence commandée est un corps solide transparent au rayonnement.

Dans ce domaine, on peut citer les cellules utilisant des cristaux de phosphate acide mono-potassique (KDP). Les cellules utilisant des cristaux électrooptiques linéaires ou quadratiques sont efficaces, mais relativement coûteuses. On peut encore réaliser des dispositifs à biréfringence basés sur l'effet photoélastique. Dans ces dispositifs, on utilise une lame de verre ou de polymère, par exemple du polyméthylacrylate de méthyle, que l'on rend optiquement anisotrope en exerçant des contraintes unidirectionnelles. Si l'on désire que la biréfringence soit commandée électriquement, il faut associer à la lame un transducteur électromécanique qui transforme la tension électrique de commande en tension mécanique appliquée à la lame. La combinaison des effets photoélastiques et piézoélectrique mis en oeuvre par des éléments séparés permet de réaliser un dispositif biréfringent à commande électrique qui soit efficace. Cependant, cette solution est relativement complexe.

En vue de pallier les inconvénients énumérés ci-dessus, l'invention propose un dispositif électrooptique à commande électrique destiné à modifier par biréfringence électrique les caractéristiques de polarisation d'un rayonnement optique incident, ledit dispositif comportant un corps assurant la transmission dudit rayonnement et des électrodes, de commande destinées à créer au sein de ce corps un champ électrique dont l'intensité varie au prorata de la tension de commande appliquée, caractérisé en ce que ce coprs présente macroscopiquement les propriétés électrooptiques attachées à une classe cristallographique non centrosymétrique et est constitué par un polymère ou par un copolymère; la zone didut corps traversée par ledit rayonnement ayant acquis lesdites propriétés grâce à un moment dipolaire induit préalablement par un champ électrique de polarisation.

L'invention sera mieux comprise au moyen de la description ci-après et des figures annexées parmi lesquelles:

la figure 1 représente un dispositif expérimental destiné à mettre en évidence les propriétés biréfringentes d'un polymère préalablement orienté par polarisation électrique;

la figure 2 représente un premier exemple de dispositif électrooptique selon l'invention;

la figure 3 représente un second exemple de dispositif électrooptique selon l'invention;

la figure 4 représente un troisième exemple de dispositif électrooptique selon l'invention;

la figure 5 représente une première variante de réalisation du dispositif électrooptique selon l'invention;

la figure 6 représente une seconde variante de réalisation du dispositif électrooptique selon l'invention;

la figure 7 est une vue en coupe illustrant un détail de réalisation du dispositif électrooptique selon l'invention;

la figure 8 représente un quatrième exemple de dispositif électrooptique selon l'invention;

Avant d'aborder la description des figures, il paraît utile de donner quelques indications relativement aux matériaux polymères ou copolymères piézoélectriques qui, dans le cadre de la présente invention, sont utilisés en raison de leurs propriétés électrooptiques. La littérature technique relative aux propriétés physiques des cristaux fait l'étude exhaustive de ces propriétés et l'ouvrage de J. F. NYE "PHYSICAL PROPERTIES OF CRYSTALS" Oxford at the Clarendon Press, 1976 traite notamment de la piézoélectricité et des effets électrooptiques qui sont liés de façon biunivoque.

La structure d'un polymère semi-cristallin tel que le polyfluorure de vinylidène $PVF_2$ comprend une phase amorphe dans laquelle des amas cristallins sphéroïdaux se sont développés. Dans l'état non polarisé, ce matériau se comporte comme un matériau de la classe cristallographique monoclinique centrosymétrique. Sous l'action d'un champ électrique de polarisation très intense de l'ordre de $10^8$ Volt/mètre et à une température del'ordre de 80°C, les dipôles situés le long des chaînes macromoléculaires sont orientés. Néanmoins, on obtient les conditions optimales d'orientation par un pré-étirement des chaînes macromoléculaires de préférence à moins de 60°C. Après ce traitement, les propriétés du polymère sont celles d'un matériau de la classe cristallographique mm 2 non centrosymétrique; il possède un moment dipolaire important parallèle à la direction du champ électrique de polarisation. Les amas cristallins sont dans la phase $\beta$. La polarisation rémanente atteint $6.10^{-2}$ coulomb par mètre carré et la permittivité relative est de l'ordre de 12.

D'autres matériaux polymères présentent à des degrés moins importants les propriétés du $PVF_2$

3

étiré et polarisé. Pour mémoire, on peut citer le polychlorure de vinyle PVC, le polyfluorure de vinyle PVF et le copolymère fluorure de vinylidène-tétrafluorure d'éthylène $PVF_2$-PTFE.

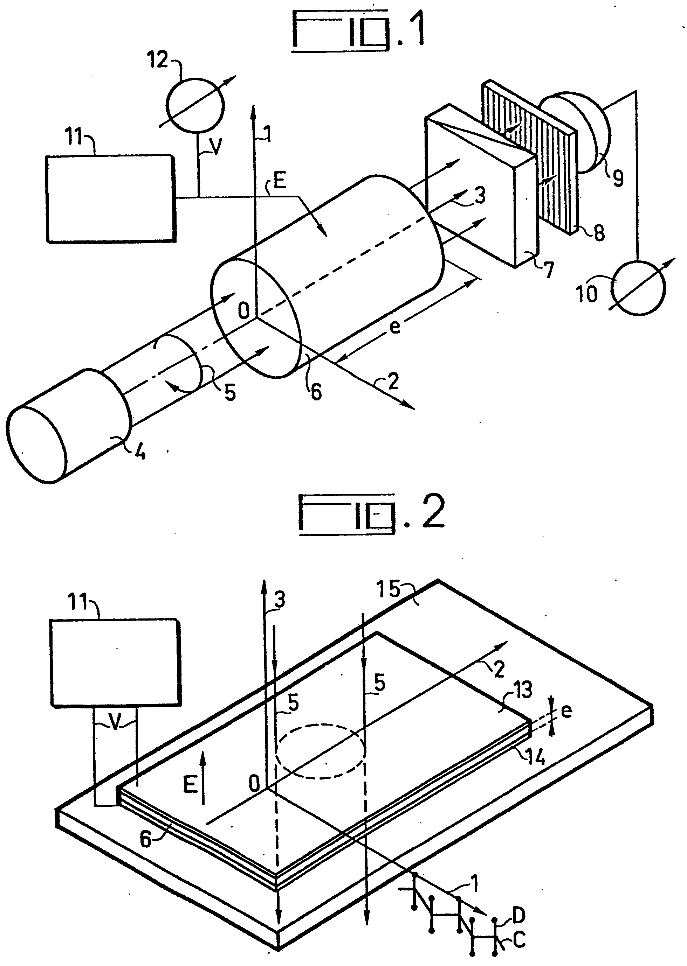

Sur la figure 1, on peut voir, rapporté à un système d'axes de référence 0, 1, 2, 3, un montage expérimental permettant de mettre en évidence les propriétés électrooptiques d'un film 6 de polymère polarisé. On supposera que le champ électrique ayant servi à polariser le polymère est orienté suivant l'axe 3. Un étirement mécanique du polymère a eu lieu dans la direction de l'axe 1. La face d'entrée du film 6 reçoit un rayonnement incident monochromatique 5 produit par une source de rayonnement 4. Le rayonnement incident est supposé polarisé circulairement comme le montre la figure 1. Le rayonnement 5 émerge par la face de sortie du film 6 qui se situe à la distance e de la face d'entrée. Le rayonnement émergent traverse ensuite un compensateur de Bravais 7 et un analyseur de polarisation rectiligne 8 avant d'être capté par un transducteur photoélectrique 9. Un indicateur 10 relié à la sortie du transducteur 9 permet de mesurer l'intensité du rayonnement transmis par l'analyseur 8. Un générateur de tension électrique 11 permet de créer au sein du film 6 un champ électrique E; un voltmètre 12 mesure la tension V donnant naissance au champ électrique inducteur E. On peut supposer par exemple que le champ électrique E est orienté selon l'axe 3, ce qui nécessite la présence d'électrodes transparentes sur les faces d'entrée et de sortie du film 6.

En l'absence de champ électrique E, le film 6 présente une anisotropie optique que l'on peut représenter par un ellipsoïde des indices.

Dans le cas du polyfluorure de polyvinylidène $PVF_2$, les indices de réfraction principaux $n_1$, $n_2$ et $n_3$ ont les valeurs suivantes:

$$n_1 = 1,444$$
$$n_2 = 1,436$$
$$n_3 = 1,425.$$

Ces valeurs indiquent que le milieu de propagation du rayonnement peut être assimilé à un milieu biaxe. Les plans de section cyclique de l'ellipsoïde passent par l'axe 2 et il existe deux axes optiques perpendiculaires à ces plans pour lesquels une onde polarisée se propage sans altération de sa polarisation. Par conséquent, une onde à polarisation circulaire parcourant la distance e dans le film 6 selon l'axe 3 va subir une modification qui la rend généralement elliptique à la sortie du bloc 6. On peut toujours ajuster le compensateur de Bravais 7 pour qu'une polarisation rectiligne en émerge, qui soit parallèle à l'axe 2. Dans cette circonstance, l'analyseur 8 orienté à l'extinction ne laisse aucun rayonnement parvenir au photodétecteur 9 et par conséquent l'indicateur 10 marque zéro. La différence de marche optique $\delta$ qui existe en l'absence de tout champ électrique de commande change de valeur lorsque l'on soumet le matériau polymère du bloc 6 à un champ électrique de commande E.

D'une façon générale, la différence de marche $\delta$ peut s'exprimer par la relation:

$$\delta = (n' - n'')e \tag{1}$$

où $n'$ et $n''$ sont les indices pour lesquels le vecteur induction D de l'onde propargée est orienté selon l'une des lignes neutres du milieu biréfringent 6.

En présence d'un champ électrique de commande E, l'ellipsoïde des indices change de forme et une intensité rayonnée dI est détectée par le photodétecteur 9. Cette intensité dI est linéairement dépendante de la variation $d\delta$ de la différence de marche.

En opérant à température constante et à tension mécanique constante, on a pour l'effet linéaire:

$$d\delta = e \cdot \frac{\partial(n'-n'')}{\partial E} \cdot E + (n'-n'') \frac{\partial e}{\partial E} \cdot E \tag{2}$$

en négligeant le second terme de l'expression (2), on voit que la biréfringence électrique peut être représentée par un coefficient d'effet électrooptique linéaire

$$\frac{\partial(n'-n'')}{\partial E}.$$

Avec les conventions usuelles de l'analyse tensorielle des milieux anisotropes, le coefficient d'effet électrooptique linéaire peut prendre les valeurs suivantes:

Si le champ électrique E est orienté suivant l'axe 3,

$$r_{13} - \frac{n_2^3}{n_1^3} r_{23} = 0,38 \; 10^{-12} \text{ mètre par volt.}$$

## 0 021 967

Si le champ électrique E est orienté suivant l'axe 2,

$$r_{42} = 0,21 \ 10^{-12} \text{ mètre par volt.}$$

Si le champ électrique E est orienté suivant l'axe 1,

$$r_{51} = 0,10 \ 10^{-12} \text{ mètre par volt.}$$

Les valeurs numériques ci-dessus ont été mesurées sur un échantillon de $PVF_2$ étiré et polarisé prenant la forme d'un film d'épaisseur e=30 microns. Les champs de mesure alternatif variaient entre 0,8 et 3 $10^6$ volts par mètre.

Les coefficients électrooptiques déduits de ces mesures sont de 10 à 100 fois plus faibles que ceux qu'on obtient avec les matériaux électrooptiques minéraux.

Afin d'avoir une idée des possibilités des matériaux polymères comme milieux biréfringents à commande électrique on peut évaluer la tension de commande $V_{\lambda/2}$ à appliquer entre électrodes pour obtenir un déphasage différentiel de $\pi$. Avec une configuration longitudinale, c'est-à-dire telle que la propagation a lieu dans le sens du champ électrique E, l'écartement d des électrodes ne peut pas descendre en-dessous de e.

La tension $V_{\lambda/2}$ s'exprime par:

$$V_{\lambda/2} = E.d$$

avec:

$$\frac{\lambda}{2} = e \frac{\partial(n'-n'')}{\partial E} E$$

et:

$$\lambda = \frac{\lambda o}{n_3}$$

où $\lambda o$=longueur d'onde du rayonnement dans le vide.

Par des calculs élémentaires, on trouve:

$$V_{\lambda/2} = \frac{\lambda o}{2n_3} \cdot \frac{d}{e} \cdot \frac{1}{\dfrac{\partial(n'-n'')}{\partial E}} \tag{3}$$

avec un laser hélium-néon, on a $\lambda o$=633 nm et il vient pour la configuration longitudinale:

$$V_{\lambda/2} = 5,8 \ 10^5 \text{ Volts.}$$

Avec une configuration transversale, c'est-à-dire telle que la propagation a lieu perpendiculairement à la direction du champ électrique de commande, on peut s'arranger pour que le rapport

$$\frac{d}{e}$$

soit petit.

Toutes autres conditions égales, on trouve avec

$$\frac{d}{e} = 0,001:$$

$$V_{\lambda/2} = 2,2 \ 10^3 \text{ Volts (E parallèle à l'axe 1),}$$

$$V_{\lambda/2} = 1,0 \ 10^3 \text{ Volts (E parallèle à l'axe 2).}$$

Les chiffres qui précèdent illustrent les aptitudes d'un matériau polymère étiré et polarisé électriquement étant en phase polaire $\beta$.

5

On peut également partir d'un polymère formé par évaporation d'un solvant (Diméthyl formamide) ou par polymérisation en présence d'un plasma de monomère. On obtient un film qui, après polarisation à chaud, présente de bons coefficients électrooptiques.

On peut encore partir d'un polymère fondu se présentant en phase $\alpha$, étiré à chaud de 500 % de sa longeur et polarisé en champ électrique intense, ce qui conduit également à de bons coefficients électrooptiques.

Sur la figure 2, on peut voir une configuration longitudinale de dispositif électrooptique selon l'invention. Un substrat 15 transparent au rayonnement polarisé 5 porte une structure électrooptique comprenant entre deux électrodes transparentes 13 et 14 un film de polymère polarisé 6. La commande électrique est assurée par un générateur de tension 11 relié aux électrodes 13 et 14. Le film 6 peut avoir été étiré par exemple dans la direction de l'axe 1, ce qui est symbolisé par une chaîne macromoléculaire C en zig-zag portant des dipôles D alignés parallèlement à l'axe 3 perpendiculaire au film 6. Il est à noter que le dispositif de la figure 2 peut fonctionner en réflexion si l'électrode 14 est une électrode réfléchissante.

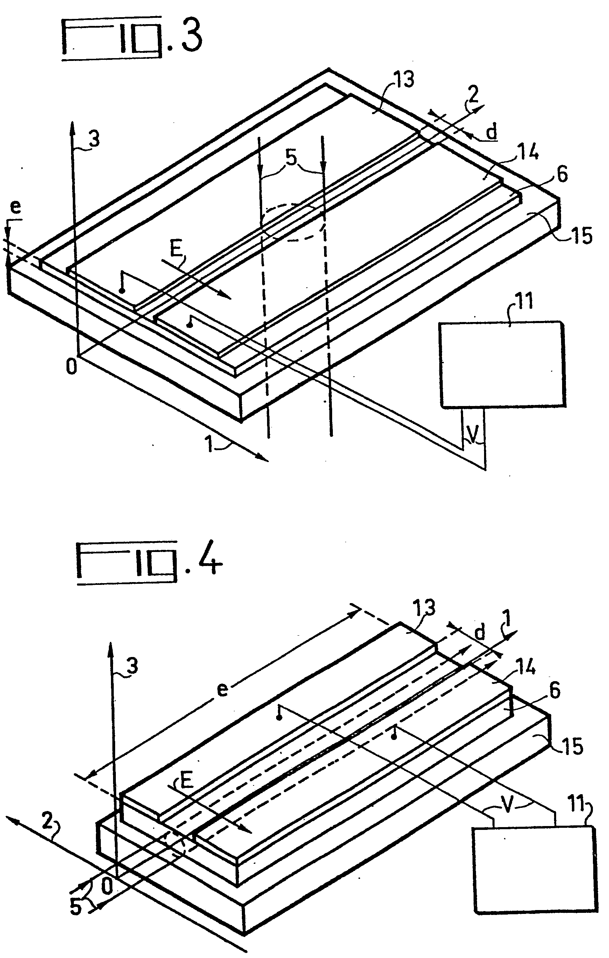

La figure 3 montre une configuration transversale dans laquelle le champ de commande E est orienté perpendiculairement à la direction du rayonnement polarisé 5. Le champ électrique E est créé par deux électrodes 13 et 14 qui sont situées sur la même face du film 6. Un écartement d est ménagé entre les électrodes 13 et 14, afin de constituer un condensateur à électrodes coplanaires. Si les électrodes 13 et 14 sont opaques, le faisceau peut passer par la fente qui les sépare. Le film polymère peut avoir été étiré dans la direction de l'un ou l'autre des axes 1 ou 2 avant polarisation par un champ électrique parallèle à l'axe 3.

La figure 4 montre une autre configuration transversale qui offre un rapport d/e beaucoup plus faible. Le rayonnement 5 se propage à l'intérieur du film 6 endessous de l'intervalle ménagé entre les électrodes 13 et 14. Cette configuration nécessite une tension de commande qui peut être plus faible que celle nécessaire avec les configurations des figures 2 et 3. La pré-polarisation du film polymère peut être faite avec une composante dans le plan du film.

Dans les figures 2 et 4, qui utilisent des films déposés ou rapportés sur un substrat, on n'exploite pas complètement la facilité de mise en forme du polymère.

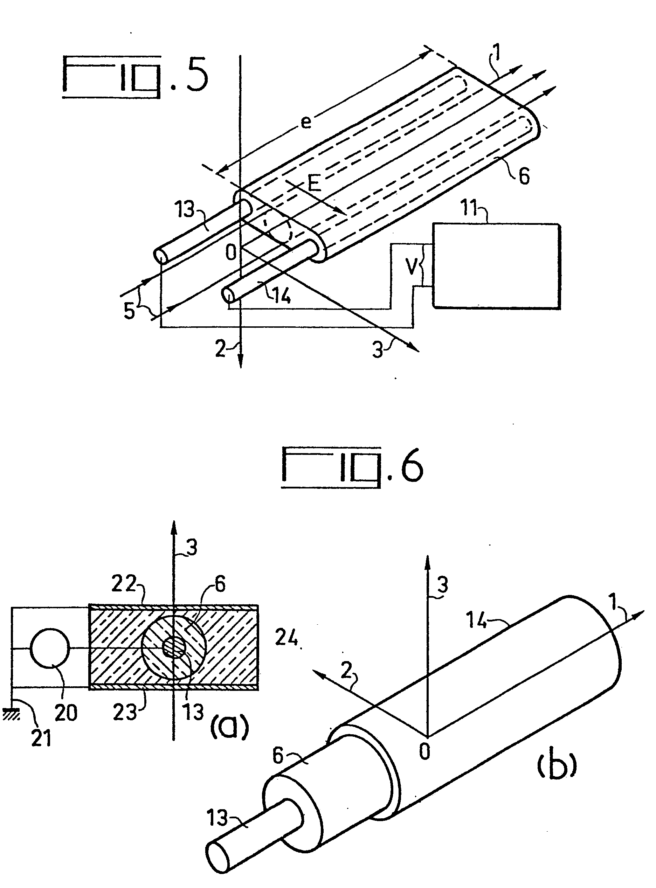

Sur la figure 5, on peut voir une variante de réalisation dans laquelle les électrodes 13 et 14 sont constituées par deux fils équidistants. Le polymère est extrudé avec les conducteurs 13 et 14 selon la technique de fabrication des câbles bifilaires; il forme le support des conducteurs et se comporte à la manière d'un guide d'onde optique. Le fonctionnement est similaire à celui du dispositif d'optique plane représenté à la figure 4. La polarisation électrique préalable est appliquée entre les deux fils 13 et 14 après extrusion de la gaine 6. L'étirage du polymère se fait sur la matière fondue à la sortie d'un orifice d'extrusion et correspond à un allongement pouvant atteindre un coefficient trois.

On peut envisager l'étirement sous forme solide, mais à priori des conducteurs normaux ne peuvent pas suivre un tel étirement. Il faut alors prévour que les conducteurs chauffés puissent glisser par rapport à la gaine ou encore qu'au lieu de les réaliser par un simple fil étiré, ils soient constitués à l'origine par des boudins hélicoïdaux à spires serrées qui peuvent aisément suivre l'étirement requis.

Sur la figure 6, on peut voir en (b) une autre variante de réalisation qui est en fait la version coaxiale de la ligne bifilaire de la figure 5. La polarisation préalable de l'ensemble polymère 6 et conducteur central 13 peut se faire en appliquant la tension de polarisation entre les électrodes 13 et 14. La polarisation rémanente présente alors la même symétrie radiale que le champ électrique de commande et les lignes neutres prennent toutes les orientations possibles autour du guide de rayonnement 6.

On peut aussi définir une orientation générale de la polarisation rémanente qui soit en moyenne dirigée suivant l'axe 3. À cet effet, on peut voir en (a) sur la figure 6, un condensateur à électrodes parallèles 22 et 23 dont le diélectrique 24 est percé en son milieu d'un alésage correspondant au diamètre extérieur de la gaine 6 du futur câble coaxial. En introduisant le câble démuni de sa gaine extérieure 14 dans l'alésage en question, on peut réaliser au moyen du générateur de haute tension 20 une polarisation anisotrope ayant une direction privilégiée globalement parallèle à l'axe 3. Bien entendu, lors de cette polarisation initiale, les électrodes 22 et 23 sont reliées à la masse 21 avec l'une des bornes du générateur 20. Il est commode également de réaliser ce type de polarisation initiale en enroulant en spirale plate le câble démuni de son électrode extérieure. L'ensemble est pincé entre deux plateaux conducteurs qui pincent l'enroulement en spirale et au conducteur central du câble, on réalise une polarisation qui peut porter sur de grandes longueurs de câble. En utilisation, ce sont des tronçons de câble qui sont utilisés, car il faut tenir compte de la diffusion que subit le rayonnement propagé et aussi de l'effet électrooptique secondaire qui provient des propriétés piézoélectriques du polymère. Cet effet secondaire avait été négligé dans la discussion de l'expression (2).

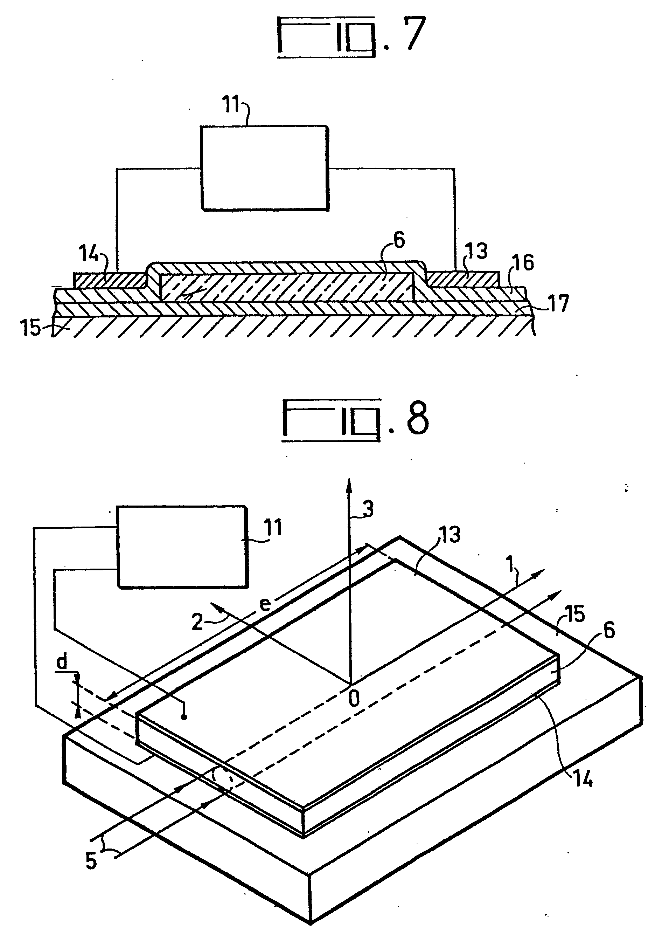

La figure 7 est une vue en coupe d'un dispositif électrooptique ayant la configuration de la figure 4, mais muni de couches diélectriques enveloppantes destinées à parfaire le guidage du rayonnement optique dansle matériau polymère. A cet effet, un film diélectrique 17 est déposé sur le substrat 15 avant de rapporter le film 6 de matériau polymère. Un second film diélectrique 16 recouvre le film 6 et les portions du film 17 qui dépassent. Les électrodes de commande 13 et 14 sont déposées sur le film 16, le plus près possible du guide 6. Cette variante de réalisation tend à augmenter légèrement la tension de commande requise pour réaliser un déphasage différentiel déterminé. En choisissant pour les diélectriques des couches 16 et 17 un indice de réfraction inférieur à ceux du polymère 6, on améliore sensiblement le confinement du rayonnement dans le polymère.

Sur la figure 8, on peut voir une configuration transversale à électrodes 13 et 14 montées de chaque côté du film polymère 6. Le rayonnement optique circule dans l'épaisseur d du film 6 et l'on peut avoir prévu un étirement du film 6 dans la direction de l'axe 1 ou 2. La prépolarisation du polymère peut être faite avec une composante dans le plan du film.

Dans la mesure de possible, les références utilisées dans la description que précède désignent les mêmes éléments. Bien que l'on ait décrit dans ce qui précède et représenté sur les dessins, les caractéristiques essentielles de la présente invention appliquées à des modes de réalisation préférés de celle-ci, il est évident que l'homme de l'art peut y apporter toute modification de forme ou de détail qu'il juge utiles, sans pour autant sortie du cadre de ladite invention. En particulier, le terme rayonnement optique n'est pas limité aux rayonnements visibles et peut notamment désigner un rayonnement infrarouge.

## Revendications

1. Dispositif électrooptique à commande électrique destiné à modifier par biréfringence électrique les caractéristiques de polarisation d'un rayonnement optique incident, ledit dispositif comportant un corps (6) assurant la transmission dudit rayonnement et des électrodes (13, 14), de commande destinées à créer au sein de ce corps un champ électrique (E) dont l'intensité varie au prorata de la tension de commande appliquée, caractérisé en ce que ce corps présente macroscopiquement les propriétés électrooptiques attachées à une classe cristallographique non centrosymétrique et est constitué par un polymère ou par un copolymère; la zone dudit corps traversée par ledit rayonnement ayant acquis lesdites propriétés grâce à un moment dipolaire induit préalablement par un champ électrique de polarisation.

2. Dispositif selon la revendication 1, caractérisé en ce que la direction du rayonnement optique coincide avec la direction du champ électrique de commande (E).

3. Dispositif selon la revendication 1, caractérisé en ce que la direction du rayonnement optique est orthogonale à la direction du champ électrique de commande (E).

4. Dispositif selon la revendication 2, caractérisé en ce que le corps (6) assurant la transmission optique est un film de polymère muni d'électrodes de commande (13, 14) sur ses deux faces principales; l'une au moins de ces électrodes étant transparente au rayonnement optique.

5. Dispositif selon la revendication 3, caractérisé en ce que le corps (6) assurant la transmission optique est un film de polymère.

6. Dispositif selon la revendication 5, caractérisé en ce que le rayonnement optique circule parallélement aux faces principales du film.

7. Dispositif selon la revendication 6, caractérisé en ce que deux électrodes de commande (13, 14) sont situées sur l'une des faces principales de manière à ménager un intervalle qui encadre la zone du polymère selon laquelle se propage le rayonnement optique.

8. Dispositif selon la revendication 6, caractérisé en ce que deux électrodes de commande (13, 14) sont respectivement disposées sur les deux faces principales de façon à encadrer la zone du polymère selon laquelle se propage le rayonnement optique.

9. Dispositif selon la revendication 5, caractérisé en ce que le rayonnement optique circule perpendiculairement aux faces principales du film (6); deux électrodes de commande (13, 14) étant agencées sur l'une de ces faces principales, afin de ménager un intervalle livrant passage au rayonnement optique.

10. Dispositif selon la revendication 3, caractérisé en ce que le corps (6) assurant la transmission du rayonnement optique se présente sous la forme d'un gainage extrudé dans lequel au moins une électrode de commande filiforme (13) est noyée.

11. Dispositif selon la revendication 10, caractérisé en ce qu'une seconde électrode de commande (14) est également noyèe de façon à former une ligne bifilaire où les conducteurs sont en nappe.

12. Dispositif selon la revendication 10, caractérisé en ce qu'une seconde électrode (14) enveloppe le corps en polymère, afin de former avec la première électrode (13) noyée une ligne coaxiale.

13. Dispositif selon l'une quelconque des revendications 10 à 12, caractérisé en ce que l'électrode noyée (13) épouse la forme d'un solénoïde étiré selon son axe.

14. Dispositif selon l'une quelconque des revendications 1 à 9, caractérisé en ce que le corps en polymère est enveloppé par des couches diélectriques (24) présentant un indice de réfraction inférieur aux indices du polymère.

15. Dispositif selon l'une quelconque des revendications précédentes, caractérisé, en ce que le polymère est constitué par du polyfluorure de vinylidène.

16. Dispositif selon l'une quelconque des revendications 1 à 9, caractérisé en ce que le film est étiré dans son plan.

17. Dispositif selon l'une quelconque des revendications 10 à 13, caractérisé en ce que le gainage extrudé est étiré longitudinalement.

18. Dispositif selon l'une quelconque des revendications 4 et 9, caractérisé en ce que le film est prépolarisé perpendiculairement à ses faces.

19. Dispositif selon la revendication 5, caractérisé en ce que le film est prépolarisé avec une composante dans son plan.

**Patentansprüche**

1. Elektrisch gesteuerte elektro-optische Vorrichtung zur elektrischen doppelbrechenden Änderung der Polarisationscharakteristiken einer einfallenden optischen Strahlung, mit einem Körper (6) zur Übertragung der Strahlung und mit Steuerelektroden (13, 14) die in diesem Körper ein elektrisches Feld (E) erzeugen, dessen Intensität in Abhängigkeit von der angelegten Steuerspannung veränderlich ist, dadurch gekennzeichnet, dass der Körper makroskopisch die einer nicht zentrosymmetrischen kristallopgraphischen Gattung zugehörigen elektrooptischen Eigenschaften besitzt und aus einem Polymer oder Mischpolymer besteht, wobei der durch die gennante Strahlung durchquerte Bereich des Körpers diese Eigenschaften infolge eines zuvor durch ein elektrisches Polarisationsfeld erzeugtes Zweipolmoment erworben hat.

2. Vorrichtung nach Anspruch 1, dadurch gekennzeichnet, dass die Richtung der optischen Strahlung mit der Richtung des elektrischen Steuerfeldes (E) übereinstimmt.

3. Vorrichtung nach Anspruch 1, dadurch gekennzeichnet, dass die Richtung der optischen Strahlung in bezug auf diejenige des elektrischen Steuerfeldes (E) orthogonal ist.

4. Vorrichtung nach Anspruch 2, dadurch gekennzeichnet, dass der die optische Ütertragung bewirkende Körper (6) ein auf seinen beiden Hauptflächen mit Steuerelektroden (13, 14) versehenener Polymerfilm und wenigstens eine dieser Elektroden für die optische Strahlung durchlässig ist.

5. Vorrichtung nach Anspruch 3, dadurch gekennzeichnet, dass die optische übertragung bewirkende Körper (6) aus einem Polymerfilm besteht.

6. Vorrichtung nach Anspruch 5, dadurch gekennzeichnet, dass die optische Strahlung parallel zu den Hauptflächen des Films verläuft.

7. Vorrichtung nach Anspruch 6, dadurch gekennzeichnet, dass die beiden Steuerelektroden (13, 14) auf einer der beiden Hauptflächen derart angeordnet sind, dass die einen Zwischenraum bilden, welcher diejenige Zone des Polymers umrahmt, gemäss welcher die optische Strahlung verlaüft.

8. Vorrichtung nach Anspruch 6, dadurch gekennzeichnet, dass die beiden Steuerelektroden (13, 14) auf je einer der Hauptflächen angeordnet sind, derart, dass sie diejenige Polymerzone umrahmen, gemäss welcher die optische Strahlung verläuft.

9. Vorrichtung nach Anspruch 5, dadurch gekennzeichnet, dass die optische Strahlung senkrecht zu den Hauptflächen des Films (6) verläuft, wobei zwei Steuerelektroden (13, 14) auf einer der Hauptflächen angeordnet sind, um einen der optischen Strahlung Durchlass gewährenden Zwischenraum zu bilden.

10. Vorrichtung nach Ansprach 3, dadurch gekennzeichnet, dass der die Übertragung der optischen Strahlung bewirkende Körper (6) die Form eines extrudierten Schlauchs besitzt, in den wenigstens eine fadenförmige Steuerelektrode (13) eingebettet ist.

11. Vorrichtung nach Anspruch 10, dadurch gekennziechnet, dass eine zweite Steuerelektrode (14) ebenfalls eingebettet ist, derart, dass eine bifiläre Linie gebildet wird, wobei die Leiter vliesartig angeordnet sind.

12. Vorrichtung nach Anspruch 10, dadurch gekennzeichnet, dass eine zweite Elektrode (14) den Polymerkörper umgibt, um mit der ersten, eingebetteten Elektrode 13 zusammen eine koaxiale Linie zu bilden.

13. Vorrichtung nach einem der Ansprüche 10 bis 12, dadurch gekennzeichnet, dass die eingebettete Elektrode (13) die Form einer Richtung ihrer Achse ausgedehnten Spule besitzt.

14. Vorrichtung nach einem der Ansprüche 1 bis 9, dadurch gekennzeichnet, dass der Polymerkörper von dielektrischen Schichten (24) umgeben ist, deren Brechungszahl niedriger ist, als diejenigen des Polymers.

15. Vorrichtung nach einem der vorstehenden Ansprüche, dadurch gekennzeichnet, dass das Polymer Polyfluorvinyliden ist.

16. Vorrichtung nach einem der vorstehenden Ansprüche, dadurch gekennzeichnet, dass der Film in seiner eigenen Ebene gezogen ist.

17. Vorrichting nach einem der Ansprüche 10 bis 13, dadurch gekennzeichnet, dass die extrudierte Hülle in Längsrichtung gezogen ist.

18. Vorrichtung nach eine der Ansprüche 4 und 9, dadurch gekennzeichnet, dass der Film senkrecht zu seinen Oberflächen vorpolarisiert ist.

19. Vorrichtung nach Anspruch 5, dadurch gekennzeichnet, dass der Film mit einer in seiner Ebene liegenden Komponente vorpolarisiert ist.

**Claims**

1. An electrically controlled electro-optical device for modifying by electrical double refraction the polarisation properties of an incident optical radiation, said device comprising a body (6) effecting the transmission of said radiation, and control electrodes (13, 14) adapted to create within said body an electrical field (E) the intensity of which varies with the applied control voltage, characterized in that said body exhibits macroscopically the electro-optical properties related to a non-centrosymmetrical crystallographic class, and is constituted by a polymer or a copolymer, that zone of said body through which passes said radiation having acquired said properties due to a dipole moment previously induced by an electric polarization field.

2. A device according to claim 1, characterized in that the direction of said optical radiation coincided with the direction of the electric control field (E).

3. A device according to claim 1, characterized in that the direction of said optical radiation is orthogonal with respect to the direction of the electric control field (E).

4. A device according to claim 2, characterized in that the body (6) effecting the optical transmission is a polymer film provided with control electrodes (13, 14) on its two main surfaces, one at least of said electrodes being transparent for said optical radiation.

5. A device according to claim 3, characterized in that said body (6) effecting the optical transmission is a film of polymeric substance.

6. A device according to claim 5, characterized in that said optical radiation circulates parallely to the main surfaces of said film.

7. A device according to claim 6, characterized in that said two control electrodes (13, 14) are located on one of the main surfaces, so as to define an interval which surrounds that zone of the polymer according to which said optical radiation is propagated.

8. A device according to claim 6, characterized in that said two control electrodes (13, 14) are located respectively on the two main surfaces, so as to surround that zone of the polymer according to which said optical radiation is propagated.

9. A device according to claim 5, characterized in that said optical radiation circulates perpendicularly to said main surfaces of the film (6), while two control electrodes (13, 14) are provided on one of said main surfaces, so as to define an interval which allows the optical radiation to pass.

10. A device according to claim 3, characterized in that the body (6) effecting the transmission of the optical radiation has the shape of an extruded sheath wherein at least one filiform control electrode (13) is embedded.

11. A device according to claim 10, characterized in that a second control electrode (14) is also embedded, so as to form a bifilary line where the conductors constitute a sheath.

12. A device according to claim 10, characterized in that a second electrode (14) envelopes the polymer body, so as to form with the embedded first electrode (13), a coaxial line.

13. A device according to any one of claims 10 to 12, characterized in that the embedded electrode has the shape of a solenoid elongated along its axis.

14. A device according to any one of claims 1 to 9, characterized in that the body made of polymeric substance is surrounded by dielectric layers (24) having a refraction index lower than the indices of the polymer.

15. A device according to any one of the preceding claims, characterized in that said polymer is constituted by polyvinylidenefluoride.

16. A device according to any one of claims 1 to 9, characterized in that said film is elongated in its plane.

17. A device according to any one of claims 10 to 13, characterized in that such extruded sheath is elongated longitudinally.

18. A device according to any one of claims 4 to 9, characterized in that said film is prepolarized perpendicularly to its surfaces.

19. A device according to claim 5, characterized in that said film is prepolarized with one component in its plane.

FIG.1

FIG.2

FIG.3

FIG.4

FIG.5

FIG.6

(a)

(b)

# FIG. 7

# FIG. 8